(19) Europäisches Patentamt
European Patent Office
Office européen des brevets

(11) EP 1 641 871 B1

(12) **FASCICULE DE BREVET EUROPEEN**

(45) Date de publication et mention de la délivrance du brevet:
**27.08.2014 Bulletin 2014/35**

(21) Numéro de dépôt: **04767291.0**

(22) Date de dépôt: **09.06.2004**

(51) Int Cl.:
***C08K 5/00*** *(2006.01)* ***C08L 83/04*** *(2006.01)*
***C08L 83/14*** *(2006.01)*

(86) Numéro de dépôt international:
**PCT/FR2004/001425**

(87) Numéro de publication internationale:
**WO 2005/003223 (13.01.2005 Gazette 2005/02)**

(54) **COMPOSITIONS POLYORGANOSILOXANES (POS) MONOCOMPOSANTES RETICULANT PAR DES REACTIONS DE POLYCONDENSATION EN ELASTOMERES A TEMPERATURE AMBIANTE ET EN PRESENCE D'EAU, ET ELASTOMERES AINSI OBTENUS**

EINKOMPONENTIGE POLYORGANOSILOXANZUSAMMENSETZUNGEN (POS-ZUSAMMENSETZUNGEN), DIE DURCH POLYKONDENSATIONSREAKTIONEN BEI UMGEBUNGSTEMPERATUR UND IN GEGENWART VON WASSER ZU ELASTOMEREN VERNETZEN, UND SO ERHALTENE ELASTOMERE

SINGLE-COMPONENT POLYORGANOSILOXANE (POS) COMPOSITIONS WHICH CROSSLINK TO FORM ELASTOMERS BY MEANS OF POLYCONDENSATION REACTIONS AT AMBIENT TEMPERATURE AND IN THE PRESENCE OF WATER, AND ELASTOMERS THUS OBTAINED

(84) Etats contractants désignés:
**AT BE BG CH CY CZ DE DK EE ES FI FR GB GR HU IE IT LI LU MC NL PL PT RO SE SI SK TR**

(30) Priorité: **25.06.2003 FR 0307653**

(43) Date de publication de la demande:
**05.04.2006 Bulletin 2006/14**

(73) Titulaire: **Bluestar Silicones France**
**69486 Lyon (FR)**

(72) Inventeurs:
- **GUENNOUNI, Nathalie**
**F-69540 Irigny (FR)**
- **CHAUSSADE, Marc**
**F-69100 Villeurbanne (FR)**

(74) Mandataire: **Valentino, Cédric**
**Rhodia Services DPI**
**Centre de Recherches de Lyon**
**BP 62**
**69192 Saint-Fons Cedex (FR)**

(56) Documents cités:
**EP-A- 0 866 099** **WO-A-02/083778**
**FR-A- 2 142 050** **FR-A- 2 786 497**
**US-A- 3 719 634** **US-A- 3 779 986**
**US-A- 5 428 103**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 641 871 B1

## Description

Le domaine de l'invention est celui des mastics silicones monocomposants, stables au stockage en absence d'humidité, réticulant par des réactions de polycondensation catalysées à l'aide d'un catalyseur mixte titane-métal en élastomères non jaunissants et adhérents sur divers supports, en opérant à température ambiante (par exemple 5 à 35°C) et en présence d'eau (par exemple humidité ambiante).

De tels mastics à base d'élastomères silicones, sont utilisés dans de nombreuses applications, notamment dans le bâtiment, en tant que moyen d'étanchéification, de jointoiement, de revêtement et/ou d'assemblage entre autres. Les propriétés rhéologiques de ces mastics silicones monocomposants (forme pâteuse) font l'objet de beaucoup d'attention dans ces applications. Il en va de même en ce qui concerne leur résistance aux intempéries et à la chaleur, leur flexibilité à basse température, leur facilité de mise en oeuvre et leur réticulation/durcissement rapide in situ, au contact de l'humidité de l'air.

Les réactions de polycondensation dont on a parlé ci-avant sont celles où des liaisons Si-$OR^0$ réagissent entre elles (le substituant $R^0$ peut être par exemple un reste alkyle, acyle ou imino) en présence d'eau. Dans le cas où $R^0$ est par exemple un reste alkyle, les réactions de polycondensation en question dégagent alors un alcool $R^0OH$. Généralement, la cinétique des réactions de polycondensation est extrêmement lente ; ces réactions sont donc catalysées par un catalyseur approprié.

Comme catalyseurs qui sont utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité. D'autres catalyseurs sont parfois mentionnés comme les catalyseurs à base de zinc, de zirconium ou d'aluminium, mais ils n'ont connus qu'un faible développement industriel en raison de leur médiocre efficacité.

Les catalyseurs à base d'étain sont très employés mais leur utilisation souffre parfois de la toxicité marquée de l'étain, et il est important de ce fait de trouver d'autres catalyseurs aussi performants mais moins toxiques. Les catalyseurs à base de titane, également très employés, présentent cependant deux inconvénients majeurs : ils ont une cinétique plus lente que les catalyseurs à base d'étain ; et dans le cas de la préparation de compositions monocomposantes silicones neutres (où $R^0$ est un reste alkyle ou imino), on obtient des élastomères qui conservent un toucher collant de surface plusieurs heures après avoir une peau et pendant ce temps ils restent sensibles à la prise de poussières par exemple. Il faut ajouter à cela que les mastics catalysés par de l'étain présentent fréquemment, notamment lorsqu'ils dégagent un alcool, des problèmes de stabilité, ce qui n'est en général pas le cas lorsque le catalyseur est un composé à base de titane.

On sait que la catalyse mixte titane-étain (cf. notamment SU-A-1 594 195) permet d'améliorer les performances de la catalyse au titane mais on retrouve une fois de plus la présence d'étain.

Il a maintenant été trouvé, et c'est ce qui constitue l'objectif essentiel visé par la présente invention, qu'il est possible :

- d'une part d'accélérer sensiblement la cinétique de prise liée à l'utilisation de catalyseurs à base de titane en introduisant dans la composition POS monocomposante réticulable un catalyseur mixte consistant dans l'association d'un composé à base de titane avec un composé métallique particulier autre que l'étain ; et
- d'autre part d' atteindre une cinétique de réticulation en surface pour le moins très proche de celle procurée par le catalyseur à base d'étain utilisé seul ;
- enfin, de n' utiliser qu'une faible quantité de composé à base de titane (qui est connu pour générer parfois un jaunissement des compositions) en l'associant à un composé métallique particulier qui sera absolument incolore, ce qui permet alors de réduire fortement le niveau de jaunissement possible du mastic, cette mesure étant particulièrement avantageuse dans le cas où l'on souhaite disposer de mastics translucides.

Les avantages attachés à la mise en oeuvre de la présente invention sont donc en résumé les suivants :

- on retrouve une cinétique très proche de celle du catalyseur à base d'étain ;
- on réduit ou supprime le toucher collant de la surface de l'élastomère dans les premiers jours suivant la réticulation ;
- on n'introduit pas d'étain ;
- on peut diminuer l'aptitude du mastic au jaunissement par la baisse du taux du titane.

Il a été démontré aussi que : les avantages précités sont encore obtenus quand on remplace, dans l'association évoquée ci-dessus, le composé à base de titane par un composé à base de zirconium ; il existe un effet de synergie marqué entre les deux composés métalliques utilisés en association conformément au contenu de la présente invention.

Plus précisément, la présente invention concerne, dans son premier objet, une composition polyorganosiloxane (POS) monocomposante, stable au stockage en absence d'humidité et réticulant, en présence d'eau, en élastomère,

non jaunissant et adhérent, ladite composition comprenant :

(i) au moins un polyorganopolysiloxane linéaire réticulable A de formule :

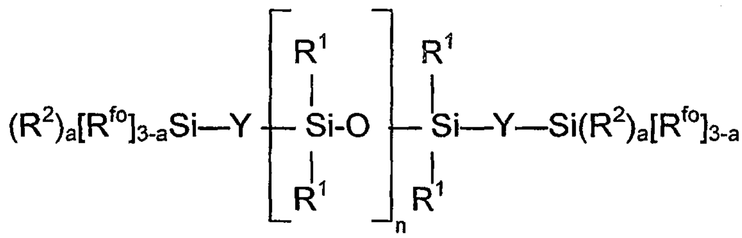

(I)

dans laquelle:

-les substituants $R^1$, identiques ou différents, représentent chacun un radical monovalent hydrocarboné saturé ou non en $C_1$ à $C_{13}$, substitué ou non substitué, aliphatique, cyclanique ou aromatique ;
-les substituants $R^2$, identiques ou différents, représentent chacun un radical monovalent hydrocarboné saturé ou non en $C_1$ à, $C_{13}$, substitué ou non substitué, aliphatique, cyclanique ou aromatique ;
-les substituants de fonctionnalisation $R^{fo}$, identiques ou différents, représentent chacun :

•un reste iminoxy de formule :

$(R^3)_2$ C=N-O-

avec $R^3$ représentant indépendamment, un alkyle linéaire ou ramifié en $C_1$ à $C_8$, un cycloalkyle en $C_3$ à $C_8$, un alcényle en $C_2$-$C_8$ ;

•un reste alkoxy de formule :

$R^4O(CH_2CH_2O)_b$-

avec $R^4$ représentant indépendamment, un alkyle linéaire ou ramifié en $C_1$ à $C_8$, un cycloalkyle en $C_3$ à $C_8$ et b = 0 ou 1 ;

•un reste acyloxy de formule :

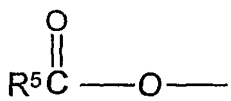

avec $R^5$ représentant un radical monovalent hydrocarboné saturé ou non en $C_1$ à $C_{13}$, substitué ou non substitué, aliphatique, cyclanique ou aromatique ;

•un reste enoxy de formule :

$(H)_{b'}(R^5)_{2-b'}C=C(-O-)R^5$

ou $R^5$ est tel que défini ci-dessus et b' = 0, 1 ou 2 ;
-chaque symbole Y représente un atome d'oxygène ou un groupe divalent hydrocarboné ;
-n a une valeur suffisante pour conférer au POS **A** une viscosité dynamique à 25°C allant de 1.000 à 1.000.000 mPa.s ;
-a est zéro ou 1 ;
(2i) éventuellement au moins une résine polyorganosiloxane **B** fonctionnalisée par au moins un radical $R^{f0}$ répondant à la définition donnée supra et présentant, dans sa structure, au moins deux motifs siloxyles différents choisis parmi ceux de formules $(R^1)_3SiO_{1/2}$ (motif M), $(R^1)_2SiO_{2/2}$ (motif D), $R^1SiO_{3/2}$ (motif T) et $SiO_2$ (motif Q), l'un au moins de ces motifs étant un motif T ou Q, les radicaux $R^1$, identiques ou différents, ayant les significations données supra

à propos de la formule (I), ladite résine ayant une teneur pondérale en radicaux fonctionnels $R^{fo}$ allant de 0,1 à 10 %, étant entendu qu'une partie des radicaux $R^1$ sont des radicaux $R^{fo}$ ;
(3i) éventuellement au moins un réticulant C de formule :

$$(R^2)_aSi[R^{fo}]_{4-a} \qquad (II)$$

avec $R^2$, $R^{fo}$ et a étant tels que définis ci-dessus ;
(4i) éventuellement une quantité résiduelle du catalyseur **D** de fonctionnalisation en présence duquel se déroule la préparation du (ou des) POS **A** et de la (ou des) résine(s) **B** facultative(s) fonctionnalisés $R^{f0}$ ;
(5i) éventuellement au moins un alcool aliphatique primaire **E** en $C_1$ à $C_3$ ;
(6i) éventuellement au moins un polydiorganosiloxane F linéaire non réactif et non fonctionnalisé $R^{fo}$ et de formule :

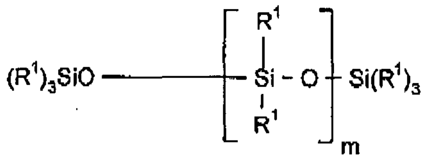 (III)

dans laquelle :

-les substituants $R^1$, identiques ou différents, ont les mêmes significations que celles données ci-avant pour le polyorganosiloxane **A** de formule (I) ;
-m a une valeur suffisante pour conférer au polymère de formule (III) une viscosité dynamique à 25°C allant de 10 à 200.000 mPa.s ;
(7i) au moins une charge minérale **G ;**
(8i) éventuellement au moins un agent auxiliaire **H** connu de l'homme de métier qui est choisi généralement, quand on en a besoin, en fonction des applications dans lesquelles les compositions selon la présente invention sont employées ;
(9i) une quantité efficace d'un catalyseur de réticulation/durcissement **I** ; ladite composition étant caractérisée par les points ($\alpha$), ($\beta$) et ($\gamma$) suivants :

- ($\alpha$) le catalyseur de durcissement **I** consiste dans l'association d'au moins un dérivé organique **I1** d'un métal M1 choisi parmi le titane, le zirconium et leurs mélanges, avec au moins un dérivé organique **I2** d'un métal M2 choisi parmi le zinc, l'aluminium, le bore, le bismuth et leurs mélanges ;
- ($\beta$) le nombre de $\mu$at.g (micro atome-gramme) des métaux M1 M2 introduit dans 1 g de composition monocomposante comprenant l'ensemble des ingrédients (i) à (8i) se situe dans l'intervalle allant de 25 à 55 ;
- ($\gamma$) le rapport :

$$\frac{\text{nombre de } \mu\text{at.g de M2}}{\text{nombre total de } \mu\text{at.g de M1 + M2}} \times 100$$

se situe dans l'intervalle allant de 10 à 45 %.

La composition de mastic silicone monocomposant selon l'invention possède toutes les propriétés intéressantes et propres à ce type de produit et présente au surplus les avantages suivants déjà mentionnés ci-avant :

- on retrouve une cinétique très proche de celle du catalyseur à base d'étain ;
- on réduit ou supprime le toucher collant de la surface de l'élastomère dans les premiers jours suivant la réticulation ;
- on n'introduit pas d'étain ;
- on peut diminuer l'aptitude du mastic au jaunissement par la baisse du taux de métal M1.

En outre, la composition de mastic selon l'invention est économique et conduit à des élastomères réticulés doués de propriétés mécaniques avantageuses et adhérents sur de nombreux supports, sans même que la présence d'un auxiliaire ou promoteur d'adhérence ne soit totalement indispensable.
La composition selon l'invention correspond à une forme de réalisation dans laquelle le constituant essentiel,

à savoir le POS A est au moins partiellement fonctionnalisé au niveau de ses extrémités par les méthodes suivantes :

- quand Y représente un atome d'oxygène : réalisation d'une réaction de condensation entre les motifs ≡Si-OH terminaux d'un POS α,ω-hydroxylé **A'** précurseur et une fonction $R^{fo}$ d'un silane portant des fonctions $R^{fo}$ ; et
- quand Y représente un groupe divalent hydrocarboné : réalisation d'une réaction d'addition entre les motifs ≡Si-H terminaux d'un POS α,ω-hydrogéno **A"** précurseur et un silane oléfinique portant les fonctions $R^{fo}$ ; ou alternativement réaction d'addition entre les extrémités insaturées (par exemple vinylique ou allylique) d'un POS **A'''** et un hydrogénosilane portant les fonctions $R^{fo}$.

Le POS **A** est fonctionnalisé selon des techniques connues de l'homme du métier. Ce POS **A** fonctionnalisé correspond à une forme stable, en absence d'humidité, du mastic monocomposant ici considéré. En pratique, cette forme stable est celle de la composition conditionnée en cartouches hermétiquement fermées, qui seront ouvertes par l'opérateur lors de l'utilisation et qui lui permettront d'appliquer le mastic sur tous les supports souhaités.

Le précurseur hydroxylé **A'** du POS **A** fonctionnalisé $R^{fo}$ en bouts de chaîne est un polydiorganosiloxane α,ω-hydroxylé de formule :

**(A')**

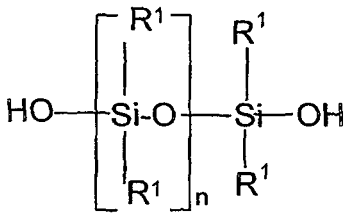

(IV-1)

avec $R^1$ et n étant tel que défini ci-dessus dans la formule (I).

Le précurseur hydrogéno **A"** du POS **A** fonctionnalisé $R^{fo}$ en bouts de chaîne est un polydiorganosiloxane α,ω-hydrogéno de formule :

**(A")**

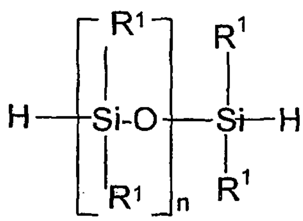

(IV-2)

avec $R^1$ et n étant tel que défini ci-dessus dans la formule (I).

Le précurseur **A'''** du POS **A** fonctionnalisé $R^{fo}$ en bouts de chaîne est un polydiorganosiloxane répondant à la définition donnée ci-dessus pour **A"** à la différence que les atomes d'hydrogène terminaux sont remplacés par des groupes insaturés.

L'éventuelle résine POS **B** fonctionnalisée $R^{fo}$ est produite de la même façon que le POS **A** fonctionnalisé $R^{fo}$, par condensation avec le silicone réticulant **C** porteur des radicaux de fonctionnalisation $R^{fo}$. Le précurseur de la résine POS **B** fonctionnalisée $R^{fo}$ est alors une résine POS **B'** hydroxylée répondant à la définition donnée ci-dessus pour **B** à la différence qu'une partie des radicaux $R^1$ correspondent à des OH.

La résine POS **B** fonctionnalisée $R^{fo}$ peut être produite aussi par réaction d'une résine POS **B"** précurseur portant des motifs ≡Si-H, sur un silane oléfinique portant les fonctions $R^{fo}$. Cette résine répond à la définition donnée ci-dessus pour B à la différence qu'une partie des radicaux $R^1$ sont maintenant des atomes d'hydrogène.

La composition de mastic monocomposant selon l'invention peut être du type acide (dans ce cas, la fonctionnalisation $R^{f0}$ représente un reste acyloxy) ou bien encore du type neutre (dans ce cas, la fonctionnalisation $R^{f0}$ représente un reste alkoxy ou iminoxy ou enoxy).

Il est à noter qu'au moins une partie du caractère inventif du mastic selon l'invention, tient à la sélection judicieuse et avantageuse des associations délimitées de composés métalliques **I1** et **12** utilisées à titre de catalyseur

de durcissement I.

Selon une disposition de réalisation de l'invention, la composition silicone monocomposante concernée : d'une part comprend, comme POS **A,** un polymère de formule (I) dans laquelle le symbole Y représente un atome d'oxygène et d'autre part est d'un type neutre selon lequel les substituants de fonctionnalisation $R^{fo}$ des ingrédients **A, B** et **C,** identiques ou différents, représentent chacun :

- un reste iminoxy de formule :

  $$(R^3)_2C=N-O-$$

  avec $R^3$ représentant indépendamment, un alkyle linéaire ou ramifié en $C_1$ à $C_8$, un cycloalkyle en $C_3$ à $C_8$, un alcényle en $C_2$-$C_8$, de préférence sélectionné dans le groupe comprenant : méthyle, éthyle, propyle, butyle, vinyle, allyle ;

- et/ou un reste alkoxy de formule :

  $$R^4O(CH_2CH_2O)_b-$$

  avec $R^4$ représentant indépendamment, un alkyle linéaire ou ramifié en $C_1$ à $C_8$, un cycloalkyle en $C_1$ à $C_8$, de préférence sélectionné dans le groupe comprenant : méthyle, éthyle, propyle, butyle et méthyglycol, et b = 0 ou 1.

En effet, il a pu être observé que les problèmes de stabilité en cartouche et de jaunissement sont plus aigus dans le cas où l'on a affaire à des mastics silicones monocomposants neutres de type iminoxy ou alkoxy.

Selon une disposition plus préférée de réalisation de l'invention :

- le POS **A** est un polymère de formule (I) dans laquelle le symbole Y représente un atome d'oxygène ;
- les substituants de fonctionnalisation $R^{fo}$ sont de type alkoxy et répondent à la formule $R^4O(CH_2CH_2O)_b$-telle que définie ci-dessus ; et
- le catalyseur de réticulation/durcissement I consiste dans l'association :

  - d'au moins un dérivé organique **I1** d'un métal M1 choisi dans le groupe constitué par :

    + des monomères **I1.1** de formule :

    $$[L]_cM1\ [(OCH_2CH_2)_d\ OR^7]_{4-c} \qquad (V)$$

    dans laquelle :

    - le symbole L représente un ligand $\sigma$ donneur avec ou non une participation $\pi$, comme par exemple les ligands du type de ceux dérivés de l'acétylacétone, de $\beta$- cétoesters, d'esters maloniques et d'acétylimines ;
    - c représente 0, 1, 2, 3 ou 4 ;
    - M1 est un métal choisi parmi le titane, le zirconium et leurs mélanges ;
    - les substituants $R^7$, identiques ou différents, représentent chacun un radical alkyle, linéaire ou ramifié, en$C_1$ à $C_{12}$;
    - d représente zéro, 1 ou 2 ;
    - avec les conditions selon lesquelles, quand le symbole d représente zéro, le radical alkyle $R^7$ possède de 2 à 12 atomes de carbone, et quand le symbole d représente 1 ou 2, le radical alkyle $R^7$ possède de 1 à 4 atomes de carbone;

    + des polymères **I1.2** découlant de l'hydrolyse partielle des monomères de formule (V) dans laquelle le symbole c est au plus égal à 3, le symbole $R^7$ a la signification précitée avec le symbole d représentant zéro; avec

  - au moins un dérivé organique **12** d'un métal M2 choisi dans le groupe constitué par :

    + les polycarboxylates **I2.1** de formule :

$$M2\ (R^8COO)_v \qquad (VI)$$

+ les alkoxydes et/ou chélates métalliques **12.2** de formule :

$$(L)_e\ M2\ (OR^9)_{v-e} \qquad (VII)$$

+ formules dans lesquelles :

- les substituants $R^8$, identiques ou différents, représentent chacun un radical alkyle, linéaire ou ramifié, en $C_1$ à $C_{20}$ ;
- le symbole $R^9$ à la signification donnée ci-avant dans la formule (V) pour $R^7$ ;
- le symbole L représente un ligand $\sigma$ donneur avec ou non une participation $\pi$, comme par exemple les ligands du type de ceux dérivés de l'acétylacétone, de $\beta$- cétoesters, d'esters maloniques et d'acétylimines ;
- M2 est un métal de valence v choisi parmi le zinc, l'aluminium, le bismuth, le bore et leurs mélanges ;
- e représente un nombre allant de zéro à v.

Sans que cela ne soit limitatif, il doit être considéré que les choix :

- comme métal M1 : du titane, et
- comme métal M2 : du zinc, de l'aluminium ou de leurs mélanges,

sont des choix particulièrement appropriés à la conduite de la présente invention.

La mise en oeuvre de ces catalyseurs de durcissement I dans les compositions selon l'invention, permet d'obtenir des résultats particulièrement surprenants et inattendus marqués par une synergie en matière notamment de temps de formation de peau et de dureté, par rapport à ce qui se passe quand on utilise les composés métalliques **I1** et **I2** pris séparément.

Les compositions organopolysiloxanes monocomposantes selon la présente invention peuvent contenir en outre un ou plusieurs agent(s) auxiliaire(s) **H** tel(s) que notamment, pour 100 parties en poids de polymère(s) diorganopolysiloxane(s) linéaire(s) A :

- éventuellement de 0,1 à 10 parties d'un agent d'adhérence **H1,**
- éventuellement une quantité efficace d'au moins un composé pris dans le groupe formé par : des antifongiques **H2 ;** des bactéricides **H3,** des diluants inertes organiques **H4** (tels que notamment : les coupes pétrolières de haut point d'ébullition, le toluène, le xylène, l'heptane, le "White-Spirit" le trichloroéthylène, le tétrachloroéthylène) ; des plastifiants **H5** appartenant par exemple au groupe des alkylbenzènes de poids moléculaire supérieur à 200 g/mole comprenant un reste alkyle ramifié ou non ayant de 10 à 30 atomes de carbone ; des agents thixotropants **H6 ;** des agents de stabilisation **H7** (tels que notamment : un sel d'acide organique de fer ou de cérium, par exemple l'octoate de fer ou de cérium ; un oxyde de cérium, un hydroxyde de cérium, un oxyde de fer, l'oxyde CaO, l'oxyde MgO) ; des pigments colorés **H8.**

De préférence, l'agent d'adhérence **H1,** quand on en utilise un, est choisi parmi les composés organosiliciques portant à la fois (1) des groupes hydrolysables liés à l'atome de silicium et (2) des groupes organiques substitués par des radicaux choisis dans le groupe des radicaux isocyanato, époxy, alkényle, isocyanurate et (meth)acrylate.

A titre illustratif d'agents d'adhérence **H1,** peuvent être cités les composés organosiliciques ci-après définis :

➢

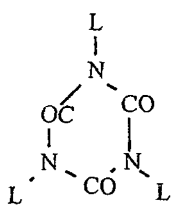

où L = $-CH_2)_3-Si(OCH_3)_3$

➢ le 3-glycidoxypropyl-triméthoxysilane (GLYMO)

- le vinyltriméthoxysilane (VTMS),
- le méthacryloxypropyltriméthoxysilane (MEMO),
- et leur mélanges.

Pour détailler un peu plus la nature des éléments constitutifs de la composition selon l'invention, il importe de préciser que les substituants $R^1$ des polymères POS **A** fonctionnalisés, des résines **B** fonctionnalisées $R^{fo}$ et des polymères **F** facultatifs non fonctionnalisés sont sélectionnés dans le groupe formé par :

- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone,
- les radicaux méthyle, éthyle, propyle, isopropyle, n-hexyle, phényle, vinyle et 3,3,3-trifluoropropyle étant particulièrement préférés.

Plus précisément encore, et à titre non limitatif, les substituants $R^1$ mentionnés ci-dessus pour les polymères POS A et F (facultatifs) comprennent :

- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2-yle,
- les radicaux aryles et halogénoaryles mononucléaires ayant de 6 à 13 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemples concrets de motifs siloxyle D : $(R^1)_2SiO_{2/2}$ présents dans les diorganopolysiloxanes **A** fonctionnalisés $R^{fo}$ de formule (I), les précurseurs **A'** et **A"** de formule (IV) et dans les diorganopolysiloxanes non réactifs F facultatifs de formule (III), on peut citer :

$(CH_3)_2SiO$,

$CH_3(CH_2{=}CH)SiO$,

$CH_3(C_6H_5)SiO$,

$(C_6H_5)_2SiO$,

$CF_3CH_2CH_2(CH_3)SiO$,

$NC\text{-}CH_2CH_2(CH_3)SiO$,

$NC\text{-}CH(CH_3)CH_2(CH_2{=}CH)SiO$,

$NC\text{-}CH_2CH_2CH_2(C_6H_5)SiO$.

Il doit être compris que, dans le cadre de la présente invention, on peut utiliser comme polymères précurseurs **A'** et **A"** de formule (IV) un mélange constitué de plusieurs polymères qui diffèrent entre eux par la valeur de la viscosité et/ou la nature des substituants liés aux atomes de silicium. Il doit être indiqué de plus que les polymères **A'** et **A"** de formule (IV) peuvent éventuellement comprendre des motifs siloxyle T de formule $R^1SiO_{3/2}$ et/ou des motifs siloxyles Q : $SiO_{4/2}$ , dans la proportion d'au plus 1 % (ce % exprimant le nombre de motifs T et/ou Q pour 100 atomes de silicium).

Les mêmes remarques s'appliquent aux polymères non réactifs **F** (facultatifs) de formule (III).

Les substituants $R^1$ des polymères fonctionnalisés **A,** des polymères précurseurs **A'** et **A"** et des polymères non réactifs et non fonctionnalisés **F** (facultatifs) avantageusement utilisés, du fait de leur disponibilité dans les produits industriels, sont les radicaux méthyle, éthyle, propyle, isopropyle, n-hexyle, phényle, vinyle et 3,3,3-trifluoropropyle. Plus avantageusement, au moins 80 % en nombre de ces substituants sont des radiaux méthyle.

On met en oeuvre des polymères précurseurs **A'** et **A"** ayant une viscosité dynamique à 25°C allant de 1.000 à 1.000.000 mPa.s et, de préférence, allant de 10.000 à 200.000 mPa.s.

S'agissant des polymères non fonctionnalisés **F** (facultatifs), ils présentent une viscosité dynamique à 25°C allant de 10 à 200.000 mPa.s et, de préférence allant de 50 à 150.000 mPa.s.

Les polymères non réactifs et non fonctionnalisés **F,** quand on les utilise, peuvent être introduits en totalité ou en plusieurs fractions et à plusieurs stades ou à un seul stade de la préparation de la composition. Les éventuelles fractions peuvent être identiques ou différentes en termes de nature et/ou de proportions. De préférence, **F** est introduit en totalité à un seul stade.

Comme exemples de substituants $R^1$ des résines POS **B** fonctionnalisées $R^{fo}$ qui conviennent ou qui sont avantageusement utilisés, on peut citer les divers radicaux $R^1$ du type de ceux mentionnés nommément ci-avant pour les polymères fonctionnalisés **A,** les polymères précurseurs **A'** et **A"** et les polymères non réactifs et non fonctionnalisés **F** (facultatifs). Ces résines silicones sont des polymères polyorganosiloxanes ramifiés bien connus dont les procédés de préparation sont décrits dans de nombreux brevets. Comme exemples concrets de résines utilisables, on peut citer les résines MQ, MDQ, TD et MDT.

De préférence, comme exemples de résines utilisables, on peut citer les résines POS **B** fonctionnalisées $R^{fo}$ ne comprenant pas, dans leur structure, de motif Q. De manière plus préférentielle, comme exemples de résines utilisables, on peut citer les résines TD et MDT fonctionnalisées comprenant au moins 20 % en poids de motifs T et ayant une teneur pondérale en groupement $R^{fo}$ allant de 0,3 à 5 %. De manière encore plus préférentielle, on utilise des résines de ce type, dans la structure desquelles au moins 80 % en nombre des substituants $R^1$ sont des radicaux méthyle. Les groupements fonctionnels $R^{fo}$ des résines **B** peuvent être portés par les motifs M, D et/ou T.

Concernant les POS **A** fonctionnalisés et les réticulants **C,** on peut citer à titre d'exemples concrets de substituants $R^2$ qui conviennent particulièrement, les mêmes radicaux que ceux mentionnés nommément ci-avant pour les substituants $R^1$ des polymères fonctionnalisés **A,** des polymères précurseurs **A'** et **A"** et des polymères non fonctionnalisés et non réactifs **F.**

S'agissant des substituants $R^3$, $R^4$, $R^5$ constitutifs des radicaux de fonctionnalisation $R^{fo}$, on mentionnera de préférence les radicaux alkyles en $C_1$-$C_4$ ; les radicaux méthyle, éthyle, propyle, isopropyle et n-butyle s'avèrent plus spécialement appropriés.

S'agissant de chaque symbole Y, il représente comme on l'a déjà signalé un atome d'oxygène ou un groupe divalent hydrocarboné. A titre de groupes divalents hydrocarbonés, on mentionnera de préférence les groupes méthylène, éthylène, propylène, butylène ; le groupe éthylène est plus particulièrement préféré.

Selon la disposition "plus préférée de réalisation de l'invention" déjà évoquée supra, chaque symbole Y représente un atome d'oxygène et les radicaux de fonctionnalisation $R^{fo}$ sont de type alcoxy et, dans ce contexte, selon une disposition encore plus préférée, ils sont issus de réticulants silanes C choisis dans le groupe comprenant :

Si(OCH3)4

$Si(OCH_2CH3)4$

$Si(OCH_2CH_2CH3)4$

$(CH_3O)_3SiCH_3$

$(C_2H_5O)_3SiCH_3$

$(CH_3O)_3Si(CH=CH_2)$

$(C_2H_5O)_3Si(CH=CH_2)$

$(CH_3O)_3Si(CH_2-CH=CH_2)$

$(CH_3O)_3Si[CH_2-(CH_3)C=CH_2]$

$(C_2H_5O)_3Si(OCH_3)$

$Si(OCH_2\text{-}CH_2\text{-}OCH_3)_4$

$CH_3Si(OCH_2\text{-}CH_2\text{-}OCH_3)_3$

$(CH_2{=}CH)Si(OCH_2CH_2OCH_3)_3$

$C_6H_5Si(OCH_3)_3$

$C_6H_5Si(OCH_2\text{-}CH_2\text{-}OCH_3)_3$.

En pratique, les réticulants silanes **C,** porteurs des radicaux de fonctionnalisation $R^{fo}$, qui conviennent tout spécialement bien, sont : $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$.

Suivant une caractéristique remarquable de l'invention, la composition peut comprendre en outre au moins un catalyseur de fonctionnalisation **D,** en présence duquel se déroule la réaction des précurseurs **A'** et **A"** (et éventuellement des précurseurs **B'** et **B")** avec le silane approprié portant des fonctions $R^{fo}$, réaction conduisant au POS **A** et à la résine **B** respectivement.

Dans le cas où le symbole Y représente un atome d'oxygène et où il intervient une réaction de condensation des précurseurs hydroxylés **A'** et éventuellement **B'** avec le silane **C,** ce catalyseur de fonctionnalisation **D** peut être sélectionné avantageusement parmi les composés suivants :

- l'acétate de potassium (cf. US-A-3.504.051),
- les oxydes minéraux divers (cf. FR-A-1.495.011),
- les carbamates (cf. EP-A-0.210.402),
- la lithine (cf. EP-A-0.367.696),
- la soude ou la potasse (cf. EP-A-0.457.693).

Dans certains cas, il peut être nécessaire de neutraliser le catalyseur de fonctionnalisation. Ainsi, s'agissant de la lithine, on peut employer à cette fin de nombreux produits, comme par exemple :

- du trichloroéthyllphosphate,
- du diméthylvinylsilylacétate,
- un silylphosphate du type de ceux décrits dans le brevet français FR-B-2 410 004,
- ou une silice de précipitation ou de combustion.

On recommande, dans le cadre de la présente invention où le symbole Y représente un atome d'oxygène, d'utiliser comme catalyseur de fonctionnalisation **D :** la lithine, de formule LiOH ou LiOH, $H_2O$. Elle peut être utilisée par exemple en solution dans au moins un alcool aliphatique **E** ayant de 1 à 3 atomes de carbone , tel que par exemple le méthanol, l'éthanol, l'isopropanol ou un mélange. de ces alcools. Lorsque un (ou des) alcool(s) est (sont) présent(s) dans le milieu réactionnel, la quantité employée se situe dans l'intervalle allant de 0,1 à 2 parties en poids, et de préférence de 0,2 à 1 partie en poids, pour 100 parties de polymère(s) hydroxylé(s) **A'.**

On met en oeuvre une quantité efficace de catalyseur de fonctionnalisation **D,** c'est-à-dire une quantité telle que la vitesse de réaction de fonctionnalisation soit la plus élevée possible, notamment en utilisant $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$ comme agent de fonctionnalisation qui n'est autre que le réticulant **C.** Dans la plupart des cas, on utilise de 0,001 à 5 moles de catalyseur **D** pour 1 mole de groupements silanols (≡Si-OH) apportés, d'une part, par le (ou les) précuseur(s) **A'** du (ou des) polymère(s) fonctionnalisé(s) **A** et, d'autre part, par le (ou les) précurseurs **B'** de la (ou des) résine(s) fonctionnalisée(s) **B.** Dans le cas préféré faisant appel à la lithine, on utilise de 0,005 à 0,5 moles de LiOH pour 1 mole de groupements silanols de **A'** ou **B'.**

La charge **G** prévue est minérale et peut être constituée par des produits choisis parmi les matières siliceuses ou non siliceuses.

S'agissant des matières siliceuses, elles peuvent jouer le rôle de charge renforçante ou semi-renforçante.

Les charges siliceuses renforçantes sont choisies parmi les silices colloïdales, les poudres de silice de pyrogénation (ou de combustion) et de précipitation ou leur mélange.

Ces poudres présentent une taille moyenne de particule généralement inférieure à 0,1 $\mu$m et une surface spécifique BET supérieure à 50 $m^2/g$, de préférence comprise entre 100 et 350 $m^2/g$.

Les charges siliceuses semi-renforçantes telles que des silices amorphes, des terres de diatomées ou du

quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 $\mu$m et une surface BET inférieure à 100 $m^2$/g.

De façon pratique mais non limitative, la charge employée est de la poudre de silice de pyrogénation ; cette silice est sous forme amorphe quand on vise à obtenir des mastics translucides.

Ces charges peuvent être modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.

En ce qui concerne le catalyseur de durcissement **I**, on peut mentionner : à titre d'exemples de symboles $R^7$ dans les dérivés organiques **11.1** de formule (V), les radicaux : méthyle, éthyle, propyle, isopropyle, butyle, isobutyle, sec-butyle, tert-butyle, hexyle, éthyl-2 hexyle, octyle, décyle et dodécyle ; et à titre d'exemples de symbole L dans les dérivés **11.1** de formule (V), le ligand acétylacétonate.

Comme exemples concrets de monomères **11.1** de formule (V), peuvent être cités : le titanate ou le zirconate d'éthyle, le titanate ou le zirconate de propyle, le titanate ou le zirconate d'isopropyle, le titanate ou le zirconate de butyle, le titanate ou le zirconate d'éthyl-2-hexyle, le titanate ou le zirconate d'octyle, le titanate ou le zirconate de décyle, le titanate ou le zirconate de dodécyle, le titanate ou le zirconate de $\beta$-méthoxyéthyle, le titanate ou le zirconate de $\beta$-éthoxyéthyle, le titanate ou le zirconate de $\beta$-propoxyéthyle, le titanate ou le zirconate de formule M1 $[(OCH_2CH_2)_2OCH_3]_4$, le titanate ou le zirconate de bis-isopropyle et de bis-actétylacétonate, le titanate ou le zirconate de bis-butyle et de bis-actétylacétonate. Les composés métalliques monomères **11.1** plus particulièrement appréciés sont les produits suivants, pris seuls ou en mélange : le titanate d'éthyle, le titanate de propyle, le titanate d'isopropyle, le titanate de butyle (n-butyle).

Comme exemples concrets de polymères **11.2** provenant de l'hydrolyse partielle des monomères **11.1,** peuvent être cités : les polymères **11.2** provenant de l'hydrolyse partielle des titanates ou des zirconates d'isopropyle, de butyle ou d'éthyl-2 hexyle.

En ce qui concerne encore le catalyseur de durcissement **I,** on peut mentionner : à titre d'exemples de symboles $R^8$ et $R^9$ dans les dérivés **I2.1 et 12.2** de formules (VI) et (VII) les radicaux propyle, isopropyle, butyle (n-butyle), isobutyle, sec-butyle, tert-butyle, hexyle, éthyl-2 hexyle, octyle, décyle et dodécyle ; et à titre d'exemples de symbole L dans les dérivés **12.2** de formule (VII), le ligand acétylacétonate.

Comme exemples concrets de dérivés organiques **I2** peuvent être cités : le dioctoate de zinc, le borate de tributyle, un carboxylate de bismuth et l'acétylacétonate d'aluminium. Les composés **12** plus particulièrement appréciés sont les produits suivants, pris seuls ou en mélange : le dioctoate de zinc, l'acétylacétonate d'aluminium, le butoxyde d'aluminium (linéaire ou ramifié).

Les quantités respectives de chaque constituant **I1** ou **12** du catalyseur de durcissement **I** peuvent varier dans de larges limites dès lors qu'elles répondent aux conditions ($\beta$) et ($\gamma$) précitées. Ces quantités sont choisies en fonction du niveau de valeur souhaité en matière notamment de temps de formation de peau, de persistance d'un toucher collant, de dureté, du rapport dureté initiale/dureté finale. Un excellent compromis de valeurs pour ses propriétés d'usage est obtenu en utilisant une quantité de catalyseur de durcissement **I** telle que :

- ($\beta$) le nombre de $\mu$at.g (micro atome-gramme) des métaux M1 + M2 introduit dans 1 g de composition monocomposante comprenant l'ensemble des ingrédients (i) à (8i) se situe dans l'intervalle allant de 25 à 55 ;
- ($\gamma$) le rapport :

$$\frac{\text{nombre de } \mu\text{at.g de M2}}{\text{nombre total de } \mu\text{at.g de M1 + M2}} \times 100$$

se situe dans l'intervalle allant de 10 à 45 %.

Selon une autre disposition préférée de réalisation de l'invention, la composition POS monocomposante comprend :

- 100 parties en poids de diorganopolysiloxane(s) linéaire(s) **A** fonctionnalisé(s) par $R^{fo}$,
- 0 à 30, de préférence 5 à 15, parties en poids de résine(s) **B,**
- 0 à 15, de préférence 3,5 à 7, parties en poids de réticulant(s) **C,**
- 0 à 2, de préférence 0 à 1, parties en poids d'alcool(s) **E,**
- 0 à 30, de préférence de 5 à 20, parties en poids de diorganopolysiloxane(s) linéaire(s) non fonctionnalisé(s) et non réactif(s) **F,**
- 2 à 40, de préférence 8 à 20, parties en poids de charge minérale **G,**
- 0 à 20 parties en poids d'agent(s) auxiliaire(s) **H,** et
- une quantité de catalyseur de durcissement **I** déterminée de manière à apporter dans la composition des taux de métaux M1 + M2 qui satisfont les conditions ($\beta$) et ($\gamma$) générales ou préferentielles mentionnées supra.

Les compositions conformes à l'invention durcissent à température ambiante et notamment à des températures comprises entre 5 et 35°C en présence d'humidité. Le durcissement (ou la réticulation) s'effectue de l'extérieur à l'intérieur de la masse des compositions. Il se forme d'abord, en surface, une peau puis la réticulation se poursuit dans la masse.

Ces compositions peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Selon un autre de ses aspects, la présente invention a également pour objet (second objet de l'invention) un élastomère non jaunissant susceptible d'adhérer sur différents substrats et obtenu par réticulation et durcissement de la composition de mastic silicone monocomposante décrite ci-dessus.

Les compositions organopolysiloxanes monocomposantes conformes à la présente invention sont préparées à l'abri de l'humidité en opérant dans un réacteur fermé, muni d'une agitation, dans lequel on peut au besoin faire le vide, puis remplacer éventuellement l'air chassé par un gaz anhydre, par exemple par de l'azote.

Pour cette préparation, il est recommandé d'utiliser un appareillage, fonctionnant selon un mode discontinu ou un mode continu, qui permette :

- de brasser intimement, à l'abri de l'humidité :

  + dans une <u>étape 1</u>, les constituants suivants : POS **A'** ou **A"** précurseur du POS **A** fonctionnalisé $R^{fo}$, résine **B'** ou **B"** (facultative) précurseur de la résine POS **B** fonctionnalisée $R^{fo}$, silane éventuellement oléfinique portant les fonctions $R^{fo}$ (pouvant être le silane C), catalyseur de fonctionnalisation **D,** alcool **E** (facultatif), POS non fonctionnalisé et non réactif **F** (facultatif) ;
  + puis dans une <u>étape 2</u>, le mélange réactionnel de l'étape 1 complété par l'ajout des constituants **G, H** (facultatif), **F** (facultatif) et **I ;** et

- d'évacuer les matières volatiles présentes (polymères de bas poids moléculaires, alcool formé au cours de la réaction de fonctionnalisation, alcool **E** éventuellement utilisé) à divers moments de la conduite du procédé :

  + au cours de <u>l'étape 1</u> précitée et/ou
  + au cours de <u>l'étape 2</u> précitée et/ou
  + dans une <u>étape 3</u> finale.

Il existe bien entendu, pour la conduite de ce procédé de préparation, d'autres ordres possibles d'introduction des constituants ; par exemple, on pourrait utiliser l'ordre d'introduction suivant :

+ <u>étape 1</u> : **A'** + éventuellement **B' + C + D** + éventuellement **E +** éventuellement **F + G,** avec évacuation à ce stade des matières volatiles ;
+ <u>étapes 2</u> : **C** + éventuellement **H** + éventuellement **F** + **I.**

A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.

Chacune des étapes mises en oeuvre dans cette préparation est conduite à une température se situant dans l'intervalle allant de 10 à 110°C. De préférence, chacune des étapes est conduite à une température allant de 15 à 90°C.

L'étape 1 est conduite pendant une période de temps suffisante (allant par exemple de 10 secondes à 10 minutes) pour réaliser une réaction de fonctionnalisation complète ou le plus proche possible du degré maximal de fonctionnalisation accessible dans les conditions opératoires choisies.

L'étape 2 est conduite pendant une période de temps suffisante (allant par exemple de 10 secondes à 30 minutes) pour arriver à des compositions homogènes.

L'étape 3 est conduite généralement sous une pression réduite comprise entre $20.10^2$Pa et $900.10^2$ Pa, pendant une période de temps suffisante (allant par exemple de 10 secondes à 1 heure) pour évacuer toutes les matières volatiles.

L'invention sera mieux comprise à l'aide des exemples qui suivent qui décrivent la préparation de compositions monocomposantes neutres de type alkoxy conduisant à des élastomères réticulés ayant ou non de bonnes propriétés d'usage, selon qu'ils répondent ou non à la présente invention.

## EXEMPLES 1 A 15

1) Préparation d'une composition organopolysiloxane monocomposante ne renfermant pas de catalyseur de durcissement (empâtage) :

Dans la cuve d'un mélangeur uniaxial « papillon » sont chargés 1030 g d'huile polydiméthylsiloxane $\alpha,\omega$-dihydroxylée de viscosité environ 50 000 mPa.s et 33,0 g de réticulant type vinyltriméthoxysilane. L'ensemble est mélangé à 200 tr/min pendant 2 min et 4,2 g d'un catalyseur de fonctionnalisation à la lithine sont introduits dans la cuve. On laisse la réaction de fonctionnalisation se produire pendant 4 min sous agitation de 400 tr/min, puis 33,0 g de silice de pyrogénation développant une surface spécifique d'environ 150 $m^2$/g sont incorporés à vitesse d'agitation modérée (160 tr/min), puis plus vive (4 min à 400 tr/min) pour en achever la dispersion dans le mélange. On obtient un fluide viscoélastique assez épais mais encore coulant. L'empâtage ainsi obtenu est dégazé sous vide (6 min à 130 tr/min sous vide de $30.10^2$ Pa), puis transférée dans un récipient pour stockage.

2) Ajout du catalyseur de durcissement dans l'empâtage :

Pour obtenir un mastic réticulant avec l'humidité atmosphérique, il faut ajouter à l'empâtage obtenu ci-dessus un catalyseur de durcissement.

Dans le but de comparer différents catalyseurs, nous avons ajouté, dans chaque exemple ou essai, à 30 g d'empâtage une quantité déterminée de catalyseur dont la valeur est donnée dans les tableaux 1 à 4 qui apparaissent ci-après.

Les différents catalyseurs, testés seuls ou en association, sont :

- le titanate de tétrabutyle (TBOT de la société Dupont de Nemours) ;
- le dioctoate de zinc, formulée à 80 % en poids dans une huile minérale, contenant 18 % en poids de zinc métallique (DOZ, commercialisé par la société STREM) ;
- l'acétylacetonate d'aluminium (ACAC/Al, commercialisé par la société STREM) ;
- le borate de tributyle (TBB, commercialisé par la société STREM) ;
- le carboxylate de bismuth, contenant 25 % en poids de bismuth élémentaire (K-KAT 348, commercialisé par la société KING INDUSTRY).

3) Résultats :

Les potentialités catalytiques de chaque composition ont été évaluées de deux façons :

- le temps de formation de peau « TFP » (temps au bout duquel on observe une réticulation superficielle) ; la mesure du TFP est réalisée de la manière suivante : on dépose un cordon de mastic et on affleure à intervalles de temps réguliers la surface du cordon avec l'extrémité d'une baguette de bois. Le temps de formation de peau est déterminé par le temps au bout duquel on n'entraîne pas plus de mastic lorsqu'on relève la baguette ;
- la dureté (en Shore A) au bout de 7 jours de réticulation à 23 °C/50% HR (la dureté est mesurée sur un pion de 6 mm d'épaisseur obtenue par la superposition de 3 plaques de 2 mm d'épaisseur chacune, selon les indications de la norme ASTM-D-2240).

3.1) Co-catalyse TBOT-ACAC/Al (exemples 1 à 4) :

Tableau 1

| Ex/Essais | [Al], en µat.g/g | [Ti], en µat.g/g | (ß) en µat.g/g | (γ)en % | TFP, en heure | Dureté à 7 jours (Shore A) |
|---|---|---|---|---|---|---|
| Ex 1 | 3,8 | 3,8 | 7,6 | 50,0 | **2** | **13** |
| Ex 2 | 38 | 3,8 | 41,8 | 90,9 | **2** | **15,5** |
| Ex 3 | 3,8 | 38 | 41,8 | 9,1 | **0,33** | 19 |
| Ex 4 | 38 | 38 | 76 | 50,0 | **0,33** | 19 |
| Essai A | 3,8 | 0 | 3,8 | 100,0 | > 4 | 0 |
| Essai B | 38 | 0 | 38 | 100,0 | > 4 | 10 |
| Essai C | 0 | 3,8 | 3,8 | 0,0 | > 4 | 0 |
| Essai D | 0 | 38 | 38 | 0,0 | 0,5 | 19 |

3.2) Co-catalyse TBOT-DOZ (exemples 5 à 8) :

Tableau 2

| Ex/Essais | [Zn], en µat.g/g | [Ti], en µat.g/g | (ß) en µat.g/g | (γ)en % | TFP, en heure | Dureté à 7 jours (Shore A) |
|---|---|---|---|---|---|---|
| Ex 5 | 3,8 | 3,8 | 7,6 | 50,0 | 1,75 | 14 |
| Ex 6 | 38 | 3,8 | 41,8 | 90,9 | 1,5 | 18,5 |
| Ex 7 | 3,8 | 38 | 41,8 | 9,1 | 0,25 | 21 |
| Ex 8 | 38 | 38 | 76 | 50,0 | 0,25 | 17,5 |
| Essai E | 3,8 | 0 | 3,8 | 100,0 | > 4 | 0 |
| Essai F | 38 | 0 | 38 | 100,0 | > 4 | 0 |
| Essai C | 0 | 3,8 | 3,8 | 0,0 | > 4 | 0 |
| Essai D | 0 | 38 | 38 | 0,0 | 0,5 | 19 |

3.3) Co-catalyse TBOT-TBB (exemples 9 à 12) :

Tableau 3

| Ex/Essais | [B], en µat.g/g | [Ti], en µat.g/g | (ß) en µat.g/g | (γ)en % | TFP, en heure | Dureté à 7 jours (Shore A) |
|---|---|---|---|---|---|---|
| Ex 9 | 3,8 | 3,8 | 7,6 | 50,0 | **2** | **0** |
| Ex 10 | 38 | 3,8 | 41,8 | 90,9 | **2** | **2** |
| Ex 11 | 3,8 | 38 | 41,8 | 9,1 | **0,375** | 20 |
| Ex 12 | 38 | 38 | 76 | 50,0 | **0,25** | 20 |
| Essai G | 3,8 | 0 | 3,8 | 100,0 | >4 | 0 |
| Essai H | 38 | 0 | 38 | 100,0 | 2 | 0 |
| Essai C | 0 | 3,8 | 3,8 | 0,0 | >4 | 0 |
| Essai D | 0 | 38 | 38 | 0,0 | 0,5 | 19 |

3.4) Co-catalyse TBOT-K-KAT (exemples 13 à 15) :

Tableau 4

| Ex/Essais | [Bi], en µat.g/g | [Ti], en µat.g/g | (ß) en µat.g/g | (γ)en % | TFP, en heure | Dureté à 7 jours (Shore A) |
|---|---|---|---|---|---|---|
| Ex 13 | 6 | 3,8 | 9,8 | 61,2 | **2** | **12,5** |
| Ex 14 | 24 | 3,8 | 27,8 | 86,3 | 1,75 | **2** |
| Ex 15 | 6 | 38 | 44 | 13,6 | **0,33** | 20 |
| Essai I | 6 | 0 | 6 | 100,0 | > 4 | 3 |
| Essai J | 24 | 0 | 24 | 100,0 | > 4 | 7,5 |
| Essai C | 0 | 3,8 | 3,8 | 0,0 | > 4 | 0 |
| Essai D | 0 | 38 | 38 | 0,0 | 0,5 | 19 |

3.4) Commentaires :

Les données mettant en évidence un effet de synergie sont mentionnées en gras dans les tableaux 1 à 4 ci-dessus.

Dans ces tableaux on remarque qu'il y a systématiquement une action concertée entre les catalyseurs qui conduit à une amélioration globale de la cinétique de réticulation. Si on prend par exemple le DOZ (tableau 2), on remarque que l'introduction de l'association selon l'invention contenant 3,8 µat.g/g (micro atome-gramme de zinc métallique par gramme de composition monocomposante non catalysée) de DOZ et 3,8 µat.g/g de TBOT conduit à une diminution du TFP (qui passe à 1,75 heure) et surtout à une accélération de la cinétique de réticulation de l'élastomère conduisant à une dureté Shore A de 14 après 7 jours, alors que l'utilisation de 3,8 µat.g/g de DOZ ou de TBOT pris seuls conduisent à un TFP supérieur à 4 h et une dureté nulle après 7 jours.

Les synergies les plus intéressantes sont apportées par les co-catalyses Ti-Al et Ti-Zn.

**<u>EXEMPLES 16 A 21</u>**

1) Préparation de compositions organopolysiloxanes monocomposantes comprenant, à titre de catalyseur de durcissement, différentes quantités de l'association catalytique DOZ + TBOT :

Dans la cuve d'un mélangeur uniaxial « papillon » sont chargés 704 g d'huile polydiméthylsiloxane α,ω-dihydroxylée de viscosité environ 135 000 mPa.s, 48 g d'huile polydiméthylsiloxane α,ω-triméthylsilylée de viscosité environ 100 000 mPa.s, 180 g d'huile polydiméthylsiloxane α,ω-triméthylsilylée de viscosité environ 100 mPa.s, 79 g d'une résine silicone hydroxylée (cette résine, de type MDT et ayant 1% en poids de radicaux hydroxyle, est constituée de 4% en poids de motifs $(CH_3)_3SiO_{1/2}$, 71% en poids de motifs $(CH_3)_2SiO_{2/2}$ et 25% en poids de motifs $CH_3SiO_{3/2}$ ; cette résine présente une viscosité de 100 mPa.s à 25°C), et 36 g de réticulant type vinyltriméthoxysilane. L'ensemble est mélangé à 200 tr/min pendant 2 min et 4,6 g d'un catalyseur de fonctionnalisation à la lithine sont introduits dans la cuve. On laisse la réaction de fonctionnalisation se produire pendant 4 min sous agitation de 400 tr/min, puis 114 g de silice amorphe commercialisé par la société Degussa sous la dénomination R104 sont incorporés à vitesse d'agitation modérée (160 tr/min), puis plus vive (4 min à 400 tr/min) pour en achever la dispersion dans le mélange. On ajoute alors 18 g de méthacryloxypropyltriméthoxysilane (MEMO), et le catalyseur de durcissement formé par l'association de DOZ et TBOT est ensuite introduit selon les quantités apparaissant dans le tableau 4 donné ci-après. Après 4 min de mélange à 400 tr/min, on diminue la vitesse d'agitation à 130 tr/min et on dégaze le mélange sous vide à $20.10^2$ Pa.

2) Résultats :

Nous avons suivi deux critères :

- le toucher collant après 17 heures de réticulation à 23°C sous 50% d'humidité relative (nous avons demandé à trois expérimentateurs différents de classer les 4 mastics en fonction de la persistance du toucher collant) ; ce test consiste à faire descendre un rouleau sur le film de mastic réticulé ; le film est déposé sur un plan incliné dont on peut faire varier la pente ; on note le temps (en seconde) au bout duquel le rouleau a descendu toute la pente ; on

fait varier la pente de 10° à 40° ; les résultats obtenus pour les pentes de 30° à 40° sont très proches et il n'y a pas de différenciation possible.

- le rapport (exprimé en %) entre la dureté (en Shore A) à 24 heures et la dureté à 7 jours (la dureté est mesurée sur un pion de 6 mm d'épaisseur obtenue par la superposition de 3 plaques de 2 mm d'épaisseur chacune, selon les indications de la norme ASTM-D-2240) ; un rapport de 100% signifie qu'après 24 heures de réticulation on a atteint le maximum de la valeur de dureté.

Tableau 5

| Exemples | TBOT : [Ti], en µat.g/g | DOZ : [Zn], en µat.g/g | (ß) en µat.g/g | (γ)en % | Mesure du toucher collant (pente de 10°) en s | Rapport des duretés, % |
|---|---|---|---|---|---|---|
| Ex 16 | 23,55 | 16,79 | 40,34 | 42 | 13,4 | 100 |
| Ex 17 | 33,14 | 16,79 | 49,93 | 34 | 9,4 | 100 |
| Ex 18 | 18,89 | 10,46 | 29,35 | 36 | 9,7 | 89 |
| Ex 19 | 28,49 | 10,46 | 38,95 | 27 | 12,9 | 85 |
| Ex 20 | 37,79 | 10,46 | 48,25 | 22 | 11,7 | 81 |
| Ex 21 | 33,14 | 3,85 | 36,99 | 10 | 11,7 | 76 |
| Ex 22 | 23,55 | 3,85 | 27,40 | 14 | 16,7 | 71 |
| Essai K | 37,79 | 0,00 | 37,79 | 0 | 35,9 | 70 |

Commentaires :

Les effets de synergie entre les deux composés sont légèrement différents selon que l'on considère le toucher collant ou le rapport de dureté.

En ce qui concerne le toucher collant, l'effet est remarquable dès un taux très faible de zinc (10 %) comme le montre la comparaison de l'exemple 21 avec l'essai K.

En ce qui concerne le rapport des duretés, le tableau ci-dessus nous permet de constater qu'il évolue quasi continûment avec le rapport [Zn]/Total avec un rapport de 100% atteint dès un taux de 34 % de Zn, et cela sans augmentation importante de la quantité totale de catalyseur ainsi que l'illustre l'exemple 16. Le bénéfice peut être évalué dans ce cas à une amélioration de 50 % de la cinétique de prise de l'élastomère silicone.

Notons que dans l'exemple 16, la quantité de TBOT est réduite de près de 40% par rapport à l'essai K de référence et que la vitesse de prise est améliorée dans le même temps.

## Revendications

1. Composition polyorganosiloxane (POS) monocomposante, stable au stockage en absence d'humidité et réticulant, en présence d'eau, en élastomère, non jaunissant et adhérent, ladite composition comprenant :

    (i) au moins un polyorganopolysiloxane linéaire réticulable A de formule :

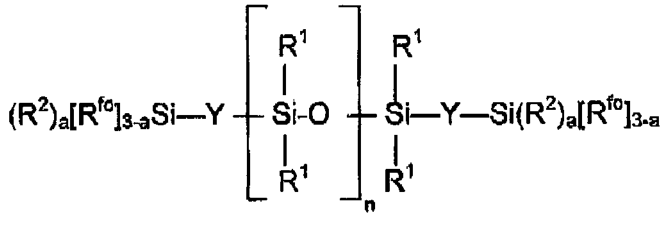

(I)

dans laquelle :

- les substituants $R^1$, identiques ou différents, représentent chacun un radical monovalent hydrocarboné saturé ou non en $C_1$ à $C_{13}$, substitué ou non substitué, aliphatique, cyclanique ou aromatique ;
- les substituants $R^2$, identiques ou différents, représentent chacun un radical monovalent hydrocarboné saturé ou non en $C_1$ à $C_{13}$, substitué ou non substitué, aliphatique, cyclanique ou aromatique ;
- les substituants de fonctionnalisation $R^{fo}$, identiques ou différents, représentent chacun :

• un reste iminoxy de formule :

$$(R^3)_2\ C{=}N{-}O{-}$$

avec $R^3$ représentant indépendamment, un alkyle linéaire ou ramifié en $C_1$ à $C_8$, un cycloalkyle en $C_3$ à $C_8$, un alcényle en $C_2$-$C_8$;
• un reste alkoxy de formule :

$$R^4O(CH_2CH_2O)_b\ -$$

avec $R^4$ représentant indépendamment, un alkyle linéaire ou ramifié en $C_1$ à $C_8$, un cycloalkyle en $C_3$ à $C_8$ et b = 0 ou 1 ;
• un reste acyloxy de formule:

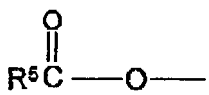

avec $R^5$ représentant un radical monovalent hydrocarboné saturé ou non en $C_1$ à $C_{13}$, substitué ou non substitué, aliphatique, cyclanique ou aromatique ;
• un reste enoxy de formule :

$$(H)_{b'}(R^5)_{2-b'}C{=}C({-}O{-})R^5$$

ou $R^5$ est tel que défini ci-dessus et b' = 0, 1 ou 2 ;
- chaque symbole Y représente un atome d'oxygène ou un groupe divalent hydrocarboné ;
- n a une valeur suffisante pour conférer au POS A une viscosité dynamique à 25°C allant de 1.000 à 1.000.000 mPa.s ;
- a est zéro ou 1 ;

(2i) éventuellement au moins une résine polyorganosiloxane B fonctionnalisée par au moins un radical $R^{f0}$ répondant à la définition donnée supra et présentant, dans sa structure, au moins deux motifs siloxyles différents choisis parmi ceux de formules $(R^1)_3SiO_{1/2}$ (motif M), $(R^1)_2SiO_{2/2}$ (motif D), $R^1SiO_{3/2}$ (motif T) et $SiO_2$ (motif Q), l'un au moins de ces motifs étant un motif T ou Q, les radicaux $R^1$, identiques ou différents, ayant les significations données supra à propos de la formule (I), ladite résine ayant une teneur pondérale en radicaux fonctionnels $R^{fo}$ allant de 0,1 à 10 %, étant entendu qu'une partie des radicaux $R^1$ sont des radicaux $R^{fo}$ ;
(3i) éventuellement au moins un réticulant C de formule :

$$(R^2)_aSi[R^{fo}]_{4-a} \qquad (II)$$

avec $R^2$, $R^{fo}$ et a étant tels que définis ci-dessus ;
(4i) éventuellement une quantité résiduelle du catalyseur D de fonctionnalisation en présence duquel se déroule la préparation du (ou des) POS A et de la (ou des) résine(s) B facultative(s) fonctionnalisés $R^{f0}$ ;
(5i) éventuellement au moins un alcool aliphatique primaire E en $C_1$ à $C_3$ ;
(6i) éventuellement au moins un polydiorganosiloxane F linéaire non réactif et non fonctionnalisé $R^{fo}$ et de formule :

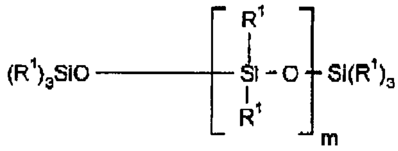 (III)

dans laquelle :

- les substituants $R^1$, identiques ou différents, ont les mêmes significations que celles données ci-avant pour le polyorganosiloxane A de formule (I) ;
- m a une valeur suffisante pour conférer au polymère de formule (III) une viscosité dynamique à 25°C allant de 10 à 200.000 mPa.s ;
(7i) au moins une charge minérale G ;
(8i) éventuellement au moins un agent auxiliaire H connu de l'homme de métier qui est choisi généralement, quand on en a besoin, en fonction des applications dans lesquelles les compositions selon la présente invention sont employées ;
(9i) une quantité efficace d'un catalyseur de réticulation/durcissement I ; ladite composition étant **caractérisée par** les points (α), (β) et (γ) suivants :

• (α) le catalyseur de durcissement 1 consiste dans l'association d'au moins un dérivé organique **I1** d'un métal M1 choisi parmi le titane, le zirconium et leurs mélanges avec au moins un dérivé organique **I2** d'un métal M2 choisi parmi le zinc, l'aluminium, le bore, le bismuth et leurs mélanges ;
• (β) le nombre de pat.g (micro atome-gramme) des métaux M1 + M2 introduit dans 1 g de composition monocomposante comprenant l'ensemble des ingrédients (i) à (8i) se situe dans l'intervalle allant de 25 à 55 ;
• (γ) le rapport :

$$\frac{\text{nombre de µat.g de M2}}{\text{nombre total de µat.g de M1 + M2}} \times 100$$

se situe dans l'intervalle allant de 10 à 45 %.

**2.** composition polyorganosiloxane (POS) monocomposante selon la revendication 1, **caractérisée en ce que** :

- le POS A est un polymère de formule (I) dans laquelle le symbole Y représente un atome d'oxygène ;
- les substituants de functionnalisation $R^{fo}$ des ingrédients **A, B** et **C**, sont de type alkoxy et répondent à la formule $R^4O(CH_2CH_2O)_b$-telle que définie ci-dessus ; et
- le catalyseur de réticulation/durcissement I consiste dans l'association :

• d'au moins un dérivé organique **I1** d'un métal M1 choisi dans le groupe constitué par :

+ des monomères **I1.1** de formule **:**

$$[L]_cM1[(OCH_2CH_2)_d\ OR^7]_{4-c} \qquad (V)$$

dans laquelle :

- le symbole L représente un ligand σ donneur avec ou non une participation π ;
- c représente 0, 1, 2, 3 ou 4 ;
- M1 est un métal choisi parmi le titane, le zirconium et leurs mélanges ;
- les substituants $R^7$, identiques ou différents, représentent chacun un radical alkyle, linéaire ou ramifié, en $C_1$ à $C_{12}$ ;
- d représente zéro, 1 ou 2 ;
- avec les conditions selon lesquelles, quand le symbole d représente zéro, le radical alkyle $R^7$ possède de 2 à 12 atomes de carbone, et quand le symbole d représente 1 ou 2, le radical alkyle $R^7$ possède de 1 à 4 atomes de carbone;

+ des polymères 11.2 découlant de l'hydrolyse partielle des monomères de formule (V) dans laquelle le symbole c est au plus égal à 3, le symbole $R^7$ a la signification précitée avec le symbole d représentant zéro; avec

• au moins un dérivé organique **I2** d'un métal M2 choisi dans le groupe constitué par :

+ les polycarboxylates 12.1 de formule :

$$M2(R^8COO)_v \qquad (VI)$$

+ les alkoxydes et chélates métalliques **I2.2** de formule :

$$(L)_eM2(OR^9)_{v-e} \qquad (VII)$$

+ formules dans lesquelles :

- les substituants $R^8$, identiques ou différents, représentent chacun un radical alkyle, linéaire ou ramifié, en $C_1$ à $C_{20}$ ;
- le symbole $R^9$ à la signification donnée ci-avant dans la formule (V) pour $R^7$ ;
- le symbole L représente un ligand $\sigma$ donneur avec ou non une participation $\pi$ ;
- M2 est un métal de valence v choisi parmi le zinc, l'aluminium, le bismuth, le bore et leurs mélanges ;
- e représente un nombre allant de zéro à v.

**3.** Composition polyorganosiloxane (POS) monocomposante selon l'une quelconque des revendications 1 ou 2, **caractérisée en ce que** les substituants $R^1$ des polymères POS **A** fonctionnalisés $R^{fo}$, des résines **B** facultatives fonctionnalisées $R^{fo}$ et des polymères F facultatifs non fonctionnalisés sont sélectionnés dans le groupe formé par :

- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone.

**4.** Composition polyorganosiloxane (POS) monocomposante selon l'une quelconque des revendications 1 à 3, **caractérisée en ce que** les silanes réticulants C porteurs des radicaux de fonctionnalisation $R^{fo}$ sont : $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$, $(CH_2{=}CH)Si(OC_2H_5)_3$.

**5.** Procédé de préparation des composition polyorganosiloxane (POS) monocomposante selon l'une quelconque des revendications 1 à 4, **caractérisé en ce que** l'on opère dans un appareillage, fonctionnant selon un mode discontinu ou un mode continu, qui permette :

- de brasser intimement, à l'abri de l'humidité :

+ dans une <u>étape 1</u>, les constituants suivants : POS **A'** ou **A"** précurseur du POS **A** fonctionnalisé $R^{fo}$, résine **B' ou B"** (facultative) précurseur de la résine POS **B** fonctionnalisée $R^{fo}$, silane éventuellement oléfinique portant les fonctions $R^{fo}$ (pouvant être le silane C), catalyseur de fonctionnalisation D, alcool **E** (facultatif), POS non fonctionnalisé et non réactif **F** (facultatif) ;
+ puis dans une <u>étape 2</u>, le mélange réactionnel de l'étape 1 complété par l'ajout des constituants **G, H** (facultatif), F (facultatif) et **I** ; et

- d'évacuer les matières volatiles présentes à divers moments de la conduite du procédé :

+ au cours de l'<u>étape 1</u> précitée et/ou
+ au cours de l'<u>étape 2</u> précitée et/ou
+ dans une <u>étape 3</u> finale.

**6.** Procédé selon la revendications 5, **caractérisé en ce que** le précurseur hydroxylé **A'** du POS **A** fonctionnalisé $R^{fo}$

en bouts de chaîne est un polydiorganosiloxane α,ω-hydroxylé de formule :

(A')

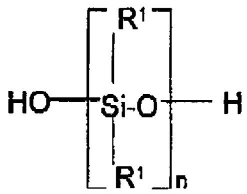

(IV)

avec $R^1$ et n étant tel que défini ci-dessus dans la formule (I).

7. Procédé selon les revendications 5 ou 6, **caractérisé en ce que** le précurseur hydroxylé **B'** de l'éventuelle résine POS **B** fonctionnalisée $R^{fo}$ répond à la définition donnée ci-dessus pour **B** dans la revendication 1, à la différence qu'une partie des radicaux $R^1$ correspondent à des OH.

8. Procédé selon l'une quelconque des revendications 5 à 7, **caractérisé en ce que** le catalyseur de fonctionnalisation D est sélectionné parmi les composés suivants :

- l'acétate de potassium,
- les oxydes minéraux divers,
- les carbamates,
- la lithine,
- la soude ou la potasse.

9. Elastomère non jaunissant susceptible d'adhérer sur différents substrats et obtenu par réticulation et durcissement de la composition de mastic silicone monocomposante selon l'une quelconque des revendications 1 à 4 ou qui est obtenue par te procédé selon l'une quelconque des revendications 5 à 8.

**Patentansprüche**

1. Einkomponentige Polyorganosiloxan-Zusammensetzung (POS-Zusammensetzung), die in Abwesenheit von Feuchtigkeit lagerstabil ist, und in Gegenwart von Wasser zu einem nicht vergilbenden und haftfähigen Elastomer vernetzt, wobei die Zusammensetzung Folgendes umfasst:

(i) mindestens ein vernetzbares lineares Polyorganosiloxan A der Formel:

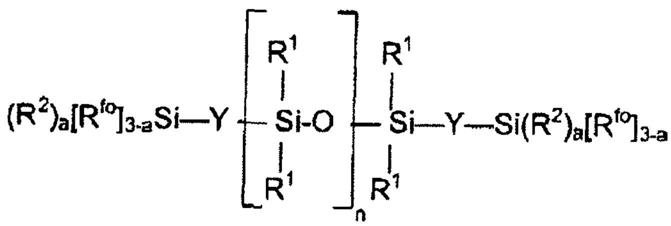

(I)

worin:

- die Substituenten $R^1$ gleich oder verschieden sind und jeweils für einen aliphatischen, cycloaliphatischen oder aromatischen, substituierten oder unsubstituierten, gesättigten oder ungesättigten einwertigen $C_1$- bis $C_{13}$-Kohlenwasserstoffrest stehen,
- die Substituenten $R^2$ gleich oder verschieden sind und jeweils für einen aliphatischen, cycloaliphatischen oder aromatischen, substituierten oder unsubstituierten, gesättigten oder ungesättigten einwertigen $C_1$- bis $C_{13}$-Kohlenwasserstoffrest stehen,
- die Funktionalisierungssubstituenten $R^{fo}$ gleich oder verschieden sind und jeweils für:

• einen Iminoxyrest der Formel:

$(R^3)_2C=N-O-$

wobei $R^3$ unabhängig lineares oder verzweigtes $C_1$- bis $C_8$-Alkyl, $C_3$- bis $C_8$-Cycloalkyl oder $C_2$- bis $C_8$-Alkenyl bedeutet,

• einen Alkoxyrest der Formel:

$R^4O(CH_2CH_2O)_b$

wobei $R^4$ unabhängig lineares oder verzweigtes $C_1$- bis $C_8$-Alkyl oder $C_3$-bis $C_8$-Cycloalkyl bedeutet und b = 0 oder 1,

• einen Acyloxyrest der Formel:

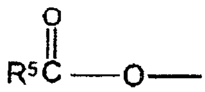

wobei $R^5$ einen aliphatischen, cycloaliphatischen oder aromatischen, substituierten oder unsubstituierten, gesättigten oder ungesättigten einwertigen $C_1$- bis $C_{13}$-Kohlenwasser-stoffrest bedeutet,

• einen Enoxyrest der Formel:

$(H)_{b'}(R^5)_{2-b'}C=C(-O-)R^5$

wobei $R^5$ wie oben definiert ist und b' = 0, 1 oder 2;
stehen,

- jedes Symbol Y für ein Sauerstoffatom oder eine zweiwertige Kohlenwasserstoffgruppe steht;
- n einen solchen Wert hat, daß das POS **A** eine dynamische Viskosität bei 25°C von 1.000 bis 1.000.000 mPa.s aufweist,
- a gleich Null oder 1 ist;

(2i) gegebenenfalls mindestens ein Polyorgano-siloxanharz **B,** das durch mindestens einen Rest $R^{fo}$ gemäß der oben angegebenen Definition funktionalisiert ist und in seiner Struktur mindestens zwei verschiedene, aus Einheiten der Formel $(R^1)_3SiO_{1/2}$ (M-Einheit), $(R^1)_2SiO_{2/2}$ (D-Einheit), $R^1SiO_{3/2}$ (T-Einheit) und $SiO_2$ (Q-Einheit) ausgewählte Einheiten aufweist, wobei es sich bei mindestens einer dieser Einheiten um eine T- oder Q-Einheit handelt, die Reste $R^1$ gleich oder verschieden sind und die oben bezüglich Formel (I) angegebenen Bedeutungen besitzen, das Harz einen Gehalt an funktionellen Resten $R^{fo}$ von 0,1 bis 10 Gew.-% aufweist und es sich versteht, daß es sich bei einem Teil der $R^1$-Reste um $R^{fo}$-Reste handelt;

(3i) gegebenenfalls mindestens einen Vernetzer **C** der Formel:

$$(R^2)_aSi[R^{fo}]_{4-a} \qquad (II)$$

worin $R^2$, $R^{fo}$ und a die oben angegebenen Bedeutungen besitzen;

(4i) gegebenenfalls eine Restmenge des Funktionalisierungskatalysators **D,** in dessen Gegenwart die Herstellung des (bzw. der) POS **A und** des (bzw. der) fakultativen Harze(s) **B,** die $R^{fo}$-funktionalisiert sind, stattfindet;

(5i) gegebenenfalls mindestens einem primären aliphatischen $C_1$- bis $C_3$-Alkohol E;

(6i) gegebenenfalls mindestens ein nicht reaktives und nicht $R^{fo}$-funktionalisiertes lineares Polydiorganosiloxan **F** der Formel:

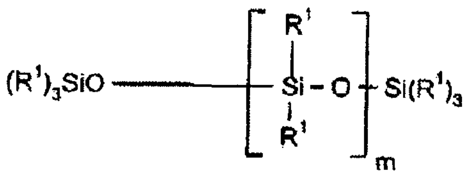

(III)

worin:

- die Substituenten $R^1$ gleich oder verschieden sind und die gleichen Bedeutungen wie oben für das Polyorganosiloxan **A** der Formel (I) angegeben besitzen,
- m einen solchen Wert hat, daß das Polymer der Formel (III) eine dynamische Viskosität bei 25°C von 10 bis 200.000 mPa.s aufweist;
(7i) mindestens einen anorganischen Füllstoff **G;**
(8i) gegebenenfalls mindestens ein dem Fachmann bekanntes Hilfsreagens **H,** das dann, wenn es benötigt wird, allgemein gemäß den Anwendungen, bei denen die Zusammensetzungen gemäß der vorliegenden Erfindung eingesetzt werden, ausgewählt wird;
(9i) eine wirksame Menge eines Vernetzungs-/Härtungskatalysators **I;**
wobei die Zusammensetzung durch die folgenden Punkte ($\alpha$), ($\beta$) und ($\gamma$) gekennzeichnet ist:

■ ($\alpha$) der Härtungskatalysator **I** besteht aus der Kombination von mindestens einem organischen Derivat **I1** eines Metalls M1, das aus Titan, Zirconium und Mischungen davon ausgewählt ist, mit mindestens einem organischen Derivat 12 eines Metalls M2, das aus Zink, Aluminium, Bor, Bismut und Mischungen davon ausgewählt ist;
■ ($\beta$) die Zahl von $\mu$at.g (Mikrogrammatomen) der in 1 g einkomponentige Zusammensetzung, die alle Bestandteile (i) bis (8i) umfasst, eingetragenen Metalle M1 + M2 liegt im Bereich von 25 bis 55;
■ ($\gamma$) das Verhältnis:

$$\frac{\text{Zahl von }\mu\text{at.g von M2}}{\text{Gesamtzahl der }\mu\text{at.g von M1 + M2}} \times 100$$

liegt im Bereich von 10 bis 45%.

**2.** Einkomponentige Polyorganosiloxan-Zusammensetzung (POS-Zusammensetzung) nach Anspruch 1, **dadurch gekennzeichnet, dass**

- es sich bei dem POS **A** um ein Polymer der Formel (I), worin das Symbol Y für ein Sauerstoffatom steht, handelt;
- die Funktionalisierungssubtituenten $R^{f0}$ der Bestandteile **A, B** und **C** vom Alkoxy-Typ sind und der Formel $R^4O(CH_2CH_2O)_b$ gemäß obiger Definition entsprechen; und
- der Vernetzungs-/Härtungskatalysator **I** aus der Kombination von:

• mindestens einem organischen Derivat **I1** eines Metalls M1, ausgewählt aus der Gruppe bestehend aus:

+ Monomeren **I1.1** der Formel:

$$[L]_cM1[(OCH_2CH_2)_dOR^7]_{4-c} \qquad (V)$$

worin:

- das Symbol L für einen $\sigma$-Donorliganden mit oder ohne $\pi$-Beteiligung steht;
- c für 0, 1, 2, 3 oder 4 steht;
- M1 für ein Metall, das aus Titan, Zirconium und Mischungen davon ausgewählt ist, steht;
- die Substituenten $R^7$ gleich oder verschieden sind und jeweils für einen linearen oder verzweigten $C_1$-bis $C_{12}$-Alkylrest stehen;
- d für Null, 1 oder 2 steht;
- mit den Maßgaben, gemäß denen dann, wenn das Symbol d für Null steht, der Alkylrest $R^7$ 2 bis 12 Kohlenstoffatome besitzt, und dann, wenn das Symbol d für 1 oder 2 steht, der Alkylrest $R^7$ 1 bis 4 Kohlenstoffatome besitzt;

+ Polymeren **I1.2,** die sich von der Teilhydrolyse der Monomere der Formel (V), worin das Symbol c größer gleich 3 ist und das Symbol $R^7$ die oben angegebene Bedeutung hat, wobei d für Null steht, ableiten; mit

• mindestens einem organischen Derivat **I2** eines Metalls M2, ausgewählt aus der Gruppe bestehend aus:

+ Polycarboxylaten **I2.1** der Formel:

$$M2\ (R^8COO)_v \qquad (VI)$$

+ Metallalkoxiden und -chelaten **I2.2** der Formel:

$$(L)_eM2(OR^9)_{v-e} \qquad (VII)$$

+ wobei in den Formeln:

- die Substituenten $R^8$ gleich oder verschieden sind und jeweils für einen linearen oder verzweigten $C_1$-bis $C_{20}$-Alkylrest stehen;
- das Symbol $R^9$ die oben in der Formel (V) für $R^7$ angegebene Bedeutung besitzt;
- das Symbol L für einen $\sigma$-Donor-liganden mit oder ohne $\pi$-Beteiligung steht;
- M2 für ein Metall mit der Wertigkeit v, das aus Zink, Aluminium, Bismut, Bor und Mischungen davon ausgewählt ist, steht;
- e für eine Zahl im Bereich von Null bis v steht;

besteht.

**3.** Einkomponentige Polyorganosiloxanzusammensetzung (POS-Zusammensetzung) nach Anspruch 1 oder 2, **dadurch gekennzeichnet, dass** die Substituenten $R^1$ der $R^{fo}$-funktionalisierten POS-Polymere **A,** der fakultativen $R^{fo}$-funktionalisierten Harze **B** und der fakultativen nicht funktionalisierten Polymere **F** aus der Gruppe bestehend aus:

- Alkyl- und Halogenalkylresten mit 1 bis 13 Kohlenstoffatomen,
- Cycloalkyl- und Halogencycloalkylresten mit 5 bis 13 Kohlenstoffatomen,
- Alkenylresten mit 2 bis 8 Kohlenstoffatomen,
- einkernigen Aryl- und Halogenarylresten mit 6 bis 13 Kohlenstoffatomen und
- Cyanoalkylresten mit 2 bis 3 Kohlenstoffatomen in den Alkylketten,

ausgewählt sind.

**4.** Einkomponentige Polyorganosiloxanzusammensetzung (POS-Zusammensetzung) nach einem der Ansprüche 1 bis 3, **dadurch gekennzeichnet, dass** es sich bei den vernetzenden Silanen **C,** die Funktionalisierungsreste $R^{fo}$ tragen, um $Si(OC_2H_5)_4$, $CH_3Si(OCH_3)_3$, $CH_3Si(OC_2H_5)_3$, $(C_2H_5O)Si(OCH_3)$, $(CH_2{=}CH)Si(OCH_3)_3$, $(CH_2{=}CH)Si(OC_2H_5)$ handelt.

**5.** Verfahren zur Herstellung der einkomponentigen Polyorganosiloxanzusammensetzung (POS-Zusammensetzung) nach einem der Ansprüche 1 bis 4, **dadurch gekennzeichnet, dass** man in einer diskontinuierlich oder kontinuierlich betriebenen Apparatur arbeitet, die es ermöglicht:

- unter Ausschluss von Feuchtigkeit

+ in einem <u>Schritt 1</u> die folgenden Bestandteile: Vorläufer-POS **A'** oder **A"** des $R^{fo}$-funktionalisierten POS **A,** Vorläuferharz **B'** oder **B"** (fakultativ) des $R^{fo}$-funktionalisierten POS-Harzes **B,** gegebenenfalls olefinisches, die $R^{fo}$-Funktionen tragendes Silan (wobei es sich um Silan **C** handeln kann), Funktionalisierungskatalysator **D,** Alkohol **E** (fakultativ), nicht funktionalisiertes und nicht reaktives POS **F** (fakultativ)
+ und dann in einem <u>Schritt 2</u> die Reaktionsmischung aus Schritt 1, ergänzt durch Zusatz der Bestandteile **G, H** (fakultativ), **F** (fakultativ) und **I,**

innig zu mischen und
- die vorliegenden flüchtigen Substanzen zu verschiedenen Zeitpunkten der Durchführung des Verfahrens abzuziehen:

+ im Lauf des obigen <u>Schritts 1</u> und/oder
+ im Lauf des obigen <u>Schritts 2</u> und/oder
+ in einem abschließenden <u>Schritt 3.</u>

6. Verfahren nach Anspruch 5, **dadurch gekennzeichnet, dass** der Hydroxyl-Vorläufer **A'** des an den Kettenenden $R^{fo}$-funktionalisierten POS **A** ein $\alpha,\omega$-Hydroxylpolydiorganosiloxan der Formel:

(A')

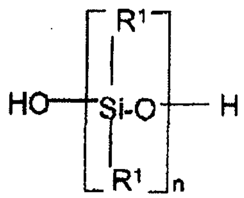

(IV)

ist, wobei $R^1$ und n wie oben in der Formel (I) definiert sind.

7. Verfahren nach Anspruch 5 oder 6, **dadurch gekennzeichnet, dass** der Hydroxyl-Vorläufer **B'** des fakultativen $R^{fo}$-funktionalisierten POS-Harzes **B** der oben für **B** in Anspruch 1 angegebenen Definition entspricht, aber mit dem Unterschied, dass es sich bei einem Teil der Reste $R^1$ um OH-Gruppen handelt.

8. Verfahren nach einem der Ansprüche 5 bis 7, **dadurch gekennzeichnet, dass** der Funktionalisierungskatalysator **D** aus den folgenden Verbindungen ausgewählt wird:

- Kaliumacetat,
- verschiedenen anorganischen Oxiden,
- Carbamaten,
- Lithiumhydroxid,
- Natriumhydroxid oder Kaliumhydroxid.

9. Nicht vergilbendes Elastomer, das auf verschiedenen Substraten haften kann und durch Vernetzung und Härtung der einkomponentigen Silikonkittzusammensetzung nach einem der Ansprüche 1 bis 4 oder der durch das Verfahren nach einem der Ansprüche 5 bis 8 erhaltenen einkomponentigen Silikonkittzusammensetzung erhältlich ist.

**Claims**

1. Single-component polyorganosiloxane composition (POS) which is stable on storage in the absence of moisture and which crosslinks in the presence of water to give a nonyellowing and adherent elastomer, said composition comprising:

(i) at least one crosslinkable linear polyorganopolysiloxane **A** of formula:

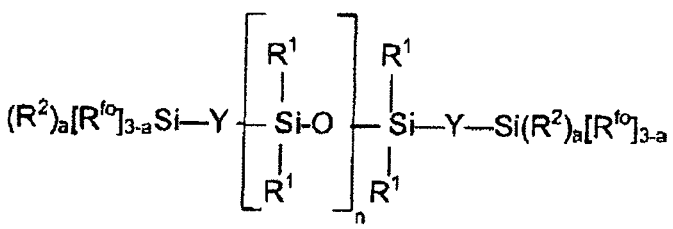

(I)

in which:

- the substituents $R^1$, which are identical or different, each represent a saturated or unsaturated, substituted or unsubstituted, aliphatic, cyclanic or aromatic, $C_1$ to $C_{13}$ monovalent hydrocarbon radical;
- the substituents $R^2$, which are identical or different, each represent a saturated or unsaturated, substituted or unsubstituted, aliphatic, cyclanic or aromatic, $C_1$ to $C_{13}$ monovalent hydrocarbon radical;
- the functionalization substituents $R^{fo}$, which are identical or different, each represent:

• an iminoxy residue of formula:

$(R^3)_2C=N-O-$

with $R^3$ independently representing a linear or branched $C_1$ to $C_8$ alkyl, a $C_3$ to $C_8$ cycloalkyl or a $C_2$-$C_8$ alkenyl;
• an alkoxy residue of formula:

$R^4O(CH_2CH_2O)_b-$

with $R^4$ independently representing a linear or branched $C_1$ to $C_8$ alkyl or a $C_3$ to $C_8$ cycloalkyl and b = 0 or 1;
• an acyloxy residue of formula:

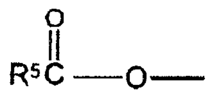

with $R^5$ representing a saturated or unsaturated, substituted or unsubstituted, aliphatic, cyclanic or aromatic, $C_1$ to $C_{13}$ monovalent hydrocarbon radical;
• an enoxy residue of formula:

$(H)_{b'}(R^5)_{2-b'}C=C(-O-)R^5$

where $R^5$ is as defined above and b' = 0, 1 or 2;
- each symbol Y represents an oxygen atom or a divalent hydrocarbon group;
- n has a value sufficient to confer, on the POS **A,** a dynamic viscosity at 25°C ranging from 1000 to 1 000 000 mPa·s;
- a is zero or 1;
(2i) optionally at least one polyorganosiloxane resin **B** functionalized by at least one radical $R^{fo}$ corresponding to the definition given above and exhibiting, in its structure, at least two different siloxyl units chosen from those of formulae $(R^1)_3SiO_{1/2}$ (M unit), $(R^1)_2SiO_{2/2}$ (D unit), $R^1SiO_{3/2}$ (T unit) and $SiO_2$ (Q unit), at least one of these units being a T or Q unit, the radicals $R^1$, which are identical or different, having the meanings given above with respect to the formula (I), said resin having a content by weight of functional radicals $R^{fo}$ ranging from 0.1 to 10%, it being understood that a portion of the radicals $R^1$ are radicals $R^{fo}$;
(3i) optionally at least one crosslinking agent **C** of formula:

$(R^2)_aSi[R^{fo}]_{4-a}$ (II)

with $R^2$, $R^{fo}$ and a being as defined above;
(4i) optionally a residual amount of the functionalization catalyst **D** in the presence of which the preparation of the POS(s) **A** and of the optional resin(s) **B** which are functionalized by $R^{fo}$ takes place;
(5i) optionally at least one primary aliphatic $C_1$ to $C_3$ alcohol **E;**
(6i) optionally at least one unreactive linear polydiorganosiloxane **F** which is not functionalized by $R^{fo}$ and which has the formula:

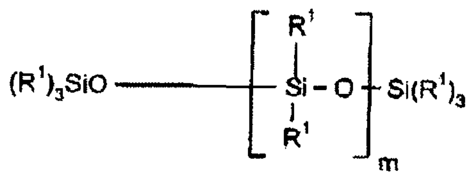

**(III)**

in which:

- the substituents $R^1$, which are identical or different, have the same meanings as those given above for the polyorganosiloxane **A** of formula (I);
- m has a value sufficient to confer, on the polymer of formula (III), a dynamic viscosity at 25°C ranging from 10 to 200 000 mPa·s;

(7i) at least one inorganic filler **G;**
(8i) optionally at least one auxiliary agent **H** known to a person skilled in the art which is generally chosen, when it is needed, according to the applications in which the compositions according to the present invention are employed;
(9i) an effective amount of a crosslinking/curing catalyst **I;** said composition being **characterized by** the following points ($\alpha$), ($\beta$) and ($\gamma$):

- ($\alpha$) the curing catalyst **I** consists of the combination of at least one organic derivative **I1** of a metal M1 chosen from titanium, zirconium and their mixtures with at least one organic derivative **I2** of a metal M2 chosen from zinc, aluminum, boron, bismuth and their mixtures;
- ($\beta$) the number of $\mu$g.at (microgram atoms) of the metals M1 + M2 introduced into 1 g of single-component composition comprising all the ingredients (i) to (8i) lies within the range extending from 25 to 55;
- ($\gamma$) the ratio:

$$\frac{\text{number of } \mu\text{g.at of M2}}{\text{total number of } \mu\text{g.at of M1 + M2}} \times 100$$

lies within the range extending from 10 to 45%.

**2.** Single-component polyorganosiloxane (POS) composition according to Claim 1, **characterized in that**:

- the POS **A** is a polymer of formula (I) in which the symbol Y represents an oxygen atom;
- the functionalization substituents $R^{fo}$ of the ingredients **A, B** and **C** are of alkoxy type and correspond to the formula $R^4O(CH_2CH_2O)_b$- as defined above; and
- the crosslinking/curing catalyst **I** consists of a combination:

• of at least one organic derivative **I1** of a metal M1 chosen from the group consisting of:

+ monomers **I1.1** of formula:

$$[L]_cM1[(OCH_2CH_2)_dOR^7]_{4-c} \qquad \text{(V)}$$

in which:

- the symbol L represents a $\sigma$ donor ligand, with or without $\pi$ participation;
- c represents 0, 1, 2, 3 or 4;
- M1 is a metal chosen from titanium, zirconium and their mixtures;
- the substituents $R^7$, which are identical or different, each represent a linear or branched $C_1$ to $C_{12}$ alkyl radical;
- d represents zero, 1 or 2;
- with the conditions according to which, when the symbol d represents zero, the alkyl radical $R^7$ has from 2 to 12 carbon atoms and, when the symbol d represents 1 or 2, the alkyl radical $R^7$ has from 1 to 4 carbon atoms;

+ polymers **I1.2** resulting from the partial hydrolysis of the monomers of formula (V) in which the symbol c is at most equal to 3 and the symbol $R^7$ has the abovementioned meaning with the symbol d representing zero; with

• at least one organic derivative **I2** of a metal M2 chosen from the group consisting of:

+ the polycarboxylates **I2.1** of formula:

$$M2(R^8COO)_v \qquad \text{(VI)}$$

+ the metal alkoxides and chelates **12.2** of formula:

$$(L)_eM2(OR^9)_{v-e} \qquad \text{(VII)}$$

+ in which formulae:

- the substituents $R^8$, which are identical or different, each represent a linear or branched $C_1$ to $C_{20}$ alkyl radical;
- the symbol $R^9$ has the meaning given above in the formula (V) for $R^7$;
- the symbol L represents a $\sigma$ donor ligand, with or without $\pi$ participation;
- M2 is a metal of valency v chosen from zinc, aluminum, bismuth, boron and their mixtures;
- e represents a number ranging from zero to v.

**3.** Single-component polyorganosiloxane (POS) composition according to either one of Claims 1 and 2, **characterized in that** the substituents $R^1$ of the polymers POS **A** functionalized by $R^{fo}$, of the optional resins **B** functionalized by $R^{fo}$ and of the optional nonfunctionalized polymers **F** are selected from the group formed by:

- alkyl and haloalkyl radicals having from 1 to 13 carbon atoms,
- cycloalkyl and halocycloalkyl radicals having from 5 to 13 carbon atoms,
- alkenyl radicals having from 2 to 8 carbon atoms,
- mononuclear aryl and haloaryl radicals having from 6 to 13 carbon atoms,
- cyanoalkyl radicals, the alkyl members of which have from 2 to 3 carbon atoms.

**4.** Single-component polyorganosiloxane (POS) composition according to any one of Claims 1 to 3, **characterized in that** the crosslinking silanes C carrying the functionalization radicals $R^{fo}$ are: $Si(OC_2H_5)_4$, $CH_3Si(OCH_3)_3$, $CH_3Si(OC_2H_5)_3$, $(C_2H_5O)_3Si(OCH_3)$, $(CH_2{=}CH)Si(OCH_3)_3$ or $(CH_2{=}CH)Si(OC_2H_5)_3$.

**5.** Process for the preparation of the single-component polyorganosiloxane (POS) composition according to any one of Claims 1 to 4, **characterized in that** the preparation is carried out in equipment, operating batchwise or continuously, which makes it possible:

- to intimately mix, with the exclusion of moisture:

+ in a stage 1, the following constituents:

precursor POS **A’** or **A"** of the POS **A** functionalized by $R^{fo}$, precursor resin **B’** or **B"** (optional) of the resin POS **B** functionalized by $R^{fo}$, silane, optionally olefinic, carrying the functional groups $R^{fo}$ (which can be the silane **C),** functionalization catalyst **D,** alcohol **E** (optional) and nonfunctionalized and unreactive POS **F** (optional);

+ then, in a stage 2, the reaction mixture from stage 1 supplemented by the addition of the constituents **G, H** (optional), **F** (optional) and **I;** and

- to discharge the volatile materials present at various points in the implementation of the process:

+ during the abovementioned stage 1 and/or
+ during the abovementioned stage 2 and/or
+ in a final stage 3.

**6.** Process according to Claim 5, **characterized in that** the hydroxylated precursor **A’** of the POS **A** functionalized by $R^{fo}$ at the chain ends is an $\alpha,\omega$-hydroxylated polydiorganosiloxane of formula:

**(A')**

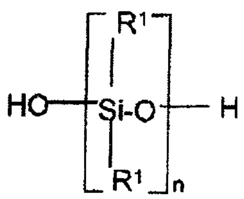

(IV)

with $R^1$ and n being as defined above in the formula (I).

**7.** Process according to Claim 5 or Claim 6, **characterized in that** the hydroxylated precursor **B'** of the optional resin POS **B** functionalized by $R^{fo}$ corresponds to the definition given above for **B** in claim 1, except that a portion of the radicals $R^1$ correspond to OH groups.

**8.** Process according to any one of Claims 5 to 7, **characterized in that** the functionalization catalyst **D** is selected from the following compounds:

- potassium acetate,
- various inorganic oxides,
- carbamates,
- lithium hydroxide,
- sodium hydroxide or potassium hydroxide.

**9.** Nonyellowing elastomer capable of adhering to various substrates and obtained by crosslinking and curing the single-component silicone mastic composition according to any one of Claims 1 to 4 or which is obtained by the process according to any one of Claims 5 to 8.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2557582 A
- FR 2786497 A
- SU 1594195 A
- US 3504051 A
- FR 1495011 A
- EP 0210402 A
- EP 0367696 A
- EP 0457693 A
- FR 2410004 B
- FR 1126884
- FR 1136885
- FR 1236505
- GB 1024234 A